# EUROPEAN PATENT SPECIFICATION

(11) **EP 0 490 445 B1**
(45) Date of publication and mention of the grant of the patent: **28.02.1996**
(21) Application number: 91203214.1
(22) Date of filing: 06.12.1991
(51) Int. Cl.: C08G 67/02

(54) **Catalyst compositions**
Katalysatormassen
Compositions de catalyseur

(30) Priority: 11.12.1990 NL 9002719
(43) Date of publication of application: 17.06.1992
(73) Proprietor: SHELL INTERNATIONALE RESEARCH MAATSCHAPPIJ B.V., NL-2596 HR Den Haag (NL)
(72) Inventor: Klusener, Peter Anton August, NL-1031 CM Amsterdam (NL); Stil, Hans Arie, NL-1031 CM Amsterdam (NL); Snel, Johannes Jacobus Maria, NL-1031 CM Amsterdam (NL)

(56) References cited:
- EP-A- 0 254 343
- EP-A- 0 272 728
- EP-A- 0 301 664
- EP-A- 0 305 012
- EP-A- 0 315 318
- US-A- 4 841 020
- US-A- 4 859 764

## Description

The invention relates to novel catalyst compositions suitable for use in the preparation of polymers of carbon monoxide with one or more α-olefins with at least three carbon atoms per molecule (hereinafter indicated for short as C₃₊ α-olefins) and optionally also with ethene.

It is known that linear polymers of carbon monoxide with one or more C₃₊ α-olefins and optionally also with ethene in which polymers the units from carbon monoxide and the units from the olefins are present in a substantially alternating arrangement, can be prepared by contacting the monomers at elevated temperature and pressure with a catalyst composition on the basis of a Group VIII metal, an anion of an acid with a pKa of less than 6 and a phosphorus bidentate ligand with the general formula (R¹)(R)P-R-P(R¹)(R) in which R¹ and R represent identical or different optionally polar substituted hydrocarbyl groups and in which R is a divalent organic bridging group which contains at least two carbon atoms in the bridge connecting the two phosphorus atoms.

During an investigation by the applicant into the use of the above-mentioned catalyst compositions in the preparation of polymers of carbon monoxide with ethene, it was found that in the alternating polymers thus obtained the units from carbon monoxide were present mainly as carbonyl groups. In addition, a small percentage of the units from carbon monoxide can be present in 2,5-furandiyl groups. These groups can be thought of as having been formed by enolisation of two carbonyl groups separated from each other by an ethylene group, followed by elimination of water and ring closure. The investigation further showed that the use of the above-mentioned catalyst compositions for the preparation of polymers of carbon monoxide with ethene and with one or more C₃₊ α-olefins, results in polymers being obtained in which a higher percentage of the units from carbon monoxide is present in 2,5-furandiyl groups, which groups are mainly present as 3-alkyl-2,5-furandiyl groups. The more C₃₊ α-olefin contained in the prepared polymers, the higher the percentage of the units from carbon monoxide that are as a rule present in optionally 3-alkyl-substituted 2,5-furandiyl groups. The investigation finally showed that the use of the above-mentioned catalyst compositions for the preparation of polymers of carbon monoxide with one or more C₃₊ α-olefins (i.e. without ethene), resulted in polymers being obtained in which more than 10% of the units from carbon monoxide are present in 3-alkyl-2,5-furandiyl groups. In some cases with these polymers, as much as about 50% of the units from carbon monoxide can be present bound in this way.

The presence of a substantial percentage of the units from carbon monoxide in optionally 3-alkyl-substituted furandiyl groups is undesirable for two reasons. Firstly, it is detrimental to the stability of the polymers. The second objection is related to the possibility of chemical modification of the polymers. The present polymers contain carbonyl groups as functional groups. They are therefore also referred to as polyketones. These carbonyl groups can be converted by chemical reaction into many other functional groups. Such chemical modification changes the properties of the polymers and thus they become eligible for applications for which the original polymers were not or less suitable. Examples of chemical reactions which can be applied to the polymers are the conversion into polyamines by catalytic hydrogenation in the presence of ammonia, the conversion into polyalcohols by catalytic hydrogenation, the conversion into polyphenols by condensation with phenols and finally the conversion into polythiols by catalytic hydrogenation in the presence of hydrogen sulphide. The higher the percentage of the units from carbon monoxide that occur in the present polymers in the form of optionally 3-alkyl-substituted 2,5-furandiyl groups, the lower the percentage of these units that are present as carbonyl groups. This limits the possibility for chemical modification of the polymers.

During his investigations, the applicant first found that furanisation (that is, the formation of furandiyl groups) could be suppressed somewhat by adding an amine to the reaction mixture after the end of the polymerization, prior to its work-up. Although this measure somewhat reduces furanisation, it is not suitable for combating the problem effectively. It has now been found that the use of an amine can lead to extremely effective suppression of furanisation, provided the amine is not, as was previously done, added to the reaction mixture after the polymerization, but is incorporated in the catalyst composition prior to the polymerization. Catalyst compositions on the basis of the three previously mentioned components, which additionally contain an amine, are novel.

The present patent application therefore relates to novel catalyst compositions which contain a Group VIII metal, an anion of an acid with a pKa of less than 6, a phosphorus bidentate ligand with the general formula (R¹)(R)P-R-P(R¹)(R) and an amine. The patent application further relates to the application of these catalyst compositions in the preparation of polymers of carbon monoxide with one or more C₃₊ α-olefins and optionally also with ethene.

In this patent application, Group VIII metals are understood to be the noble metals ruthenium, rhodium, palladium, osmium, iridium and platinum, as well as the iron group metals iron, cobalt and nickel. In the catalyst compositions the Group VIII metal is preferably chosen from palladium, nickel and cobalt. Palladium is particularly preferred as Group VIII metal. The incorporation of the Group VIII metal in the catalyst compositions preferably takes place in the form of a salt of a carboxylic acid, in particular in the form of an acetate.

The acid of which an anion should be present in the catalyst compositions preferably has a pKa of less than 4 and in particular a pKa of less than 2. Suitably the anion is provided in the form of a salt or an acid, and it has been found that the positive effect of the addition of the amine to the catalyst composition, is greatest when the anion is provided in the form of an acid. Examples of acids with a pKa of less than 2 are mineral acids such as sulphuric acid and perchloric acid, sulphonic acids such as methanesulphonic acid, trifluoromethanesulphonic acid and para-toluenesulphonic acid, and halocarboxylic acids such as trichloroacetic acid, difluoroacetic acid and trifluoroacetic acid. The preferred acid is a sulphonic acid such as para-toluenesulphonic acid or a halocarboxylic acid such as trifluoroacetic acid. The acid is preferably present in the catalyst compositions in a quantity of 1-100 and in particular 2-50 mol per g.atom Group VIII metal.

In the phosphorus bidentate ligand with the general formula (R¹)(R)P-R-P(R¹)(R), both aliphatic and aromatic groups are eligible as R¹ and R groups. The phenyl group can be mentioned as an example of a suitable aromatic hydrocarbyl group. Examples of suitable polar substituted aromatic hydrocarbyl groups are the 4-chlorophenyl group and the 3,5-dichlorophenyl group. As examples of suitable aliphatic hydrocarbyl groups, the methyl group and the butyl group can be mentioned. The bridging group R preferably contains three or four atoms in the bridge connecting the two phosphorus atoms with each other. As examples of suitable R bridging groups, the -CH₂-CH₂-CH₂- group, the -CH₂-CH₂-CH₂-CH₂-group, the -CH₂-Si(CH₃)₂-CH₂- group and the -CH₂-C(CH₃)₂-C(CH₃)₂-CH₂- group can be mentioned.

For the preparation of polymers of carbon monoxide with one or more C₃₊ α-olefins and optionally also with ethene, there is preference for catalyst compositions according to the invention which contain a phosphorus bidentate ligand in which the groups R¹ and R are alkyl groups which each contain no more than 10 carbon atoms and in which the bridging group R contains four atoms in the bridge. There is particular preference for catalyst compositions containing such a phosphorus bidentate ligand in which moreover the groups R¹ and R are alkyl groups which differ from each other in their carbon number. Very favourable results were obtained according to the invention by employing catalyst compositions containing a phosphorus bidentate ligand in which the groups R¹ and R were alkyl groups differing in carbon number, one being a methyl group, such as 1,4-bis(methyl, n-butylphosphino)butane. The quantity of phosphorus bidentate ligand in the catalyst compositions according to the invention is preferably 0.5-2 and in particular 0.75-1.5 mol per g.atom Group VIII metal.

As component d) in the catalyst compositions according to the invention an amine is preferably used whose nitrogen atom, together with five carbon atoms, forms part of an aromatic ring. Examples of such amines are pyridine, the monomethyl-substituted pyridines (picolines), 2-, 3- and 4-methylpyridine, dimethyl-substituted pyridines (lutidines) such as 2,4- and 2,6-dimethylpyridine and trimethyl-substituted pyridines (collidines) such as 2,4,6-trimethylpyridine. Examples of other alkyl-substituted pyridines suitable for the present purpose are 2-propylpyridine, 2-methyl-5-ethylpyridine and 4-methyl-3-ethylpyridine. Other amines related to pyridine which are eligible for use as component d) in the catalyst compositions according to the invention are quinoline, monomethyl-substituted quinolines such as 2- and 4-methylquinoline, dimethyl-substituted quinolines such as 2,3-, 2,4- and 2,8-dimethylquinoline and trimethyl-substituted quinolines such as 2,4,8-trimethylquinoline. Finally, isoquinoline and dibenzopyridines such as acridine and phenantridine. Favourable results were among others obtained using an amine selected from pyridine, 2-methylpyridine and quinoline as component d). The quantity of amine in the catalyst compositions according to the invention is preferably 0.25-25 and in particular 0.5-10 mol per mol acid.

In addition to the components a)-d), the catalyst compositions can also contain an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. 1,4-benzoquinone and 1,4-naphthoquinone are preferred. The quantity of organic oxidizing agent employed is preferably 5-5000 and in particular 10-1000 mol per g.atom Group VIII metal.

The polymerization according to the invention is preferably carried out by contacting the monomers with a solution of the catalyst composition in a diluent in which the polymers are insoluble or almost insoluble. Lower alcohols such as methanol are very suitable as diluent. If desired, the polymerization can also be carried out in the gas phase.

As regards the C₃₊ α-olefins used as monomers in the polymer preparation according to the invention, there is preference for α-olefins with a maximum of 10 carbon atoms per molecule. There is also preference for the use of monomer mixtures in which besides carbon monoxide and optionally ethene just one C₃₊ α-olefin is present. Examples of suitable C₃₊ α-olefins are propene, pentene-1 and 4-methylpentene-1. The process according to the invention is especially suitable for the preparation of copolymers of carbon monoxide with propene and for the preparation of terpolymers of carbon monoxide with ethene and with propene.

The quantity of catalyst composition used in the preparation of the polymers can vary within wide limits. Per mol of olefin to be polymerized, a quantity of catalyst composition is preferably used which contains 10⁻⁷-10⁻³ and in particular 10⁻⁶-10⁻⁴ g.atom Group VIII metal.

The preparation of the polymers is preferably carried out at a temperature of 25-150°C and a pressure of 2-150 bar and in particular at a temperature of 30-130°C and a pressure of 5-100 bar.

The invention is further illustrated by the following examples.

### Example 1

A carbon monoxide/ethene copolymer was prepared as follows. Into a stirred autoclave with a volume of 100 ml from which air had been driven by purging with nitrogen, a catalyst solution was introduced consisting of:
40 ml methanol,
0.05 mmol palladium acetate,
0.06 mmol 2,2,3,3-tetramethyl-1,4-bis[bis(4-chlorophenyl)phosphino] butane, and
0.1 mmol para-toluenesulphonic acid.

After forcing in a 1:1 carbon monoxide/ethene mixture to a pressure of 40 bar, the contents of the autoclave were heated to 90°C. During the polymerization the pressure was kept constant by forcing in a 1:1 carbon monoxide/ethene mixture. After 1.5 hours the polymerization was terminated by cooling the reaction mixture to room temperature and releasing the pressure. The polymer was filtered off, washed with methanol and dried.

1.9 g copolymer was obtained. The polymerization rate was 240 g copolymer/(g palladium.hour).

### Example 2

A carbon monoxide/ethene copolymer was prepared in substantially the same way as in example 1, but with the following differences:
a) the catalyst solution contained 0.055 mmol 1,3-bis[bis(4-chlorophenyl)phosphino]propane instead of 2,2,3,3-tetramethyl-1,4-bis[bis(4-chlorophenyl)phosphino]butane, and
b) the reaction time was 1 hour instead of 1.5 hours.

18.3 g copolymer was obtained. The polymerization rate was 3410 g copolymer/(g palladium.hour).

### Example 3

A carbon monoxide/ethene copolymer was prepared in substantially the same way as in example 1, but with the following differences:
a) the catalyst solution contained 0.055 mmol 1,4-bis[bis(4-chlorophenyl)phosphino]butane instead of 2,2,3,3-tetramethyl-1,4-bis[bis(4-chlorophenyl)phosphino]butane, and
b) the reaction time was 1 hour instead of 1.5 hours.

1.2 g copolymer was obtained. The polymerization rate was 220 g copolymer/(g palladium.hour).

### Example 4

A carbon monoxide/ethene copolymer was prepared in substantially the same way as in example 1, but with the following differences:
a) the catalyst solution contained 0.05 mmol 2,2-dimethyl-1,3-bis[bis(4-chlorophenyl)phosphino]-2-silapropane instead of 2,2,3,3-tetramethyl-1,4-bis[bis(4-chlorophenyl)phosphino]butane, and
b) the reaction time was 1 hour instead of 1.5 hours.

0.4 g copolymer was obtained. The polymerization rate was 80 g copolymer/(g palladium.hour).

### Example 5

A carbon monoxide/ethene copolymer was prepared in substantially the same way as in example 1, but with the difference that the catalyst solution contained 0.05 mmol 1,3-bis[bis(3,5-dichlorophenyl)phosphino]propane instead of 2,2,3,3-tetramethyl-1,4-bis[bis(4-chlorophenyl)phosphino]butane.

1.9 g copolymer was obtained. The polymerization rate was 240 g copolymer/(g palladium.hour).

### Example 6

A carbon monoxide/ethene copolymer was prepared in substantially the same way as in example 1, but with the following differences:
a) the catalyst solution contained 0.055 mmol 2,2,3,3-tetramethyl-1,4-bis(diphenylphosphino)butane instead of 2,2,3,3-tetramethyl-1,4-bis[bis(4-chlorophenyl)phosphino]butane, and
b) the reaction time was 1 hour instead of 1.5 hours.

10.1 g copolymer was obtained. The polymerization rate was 1870 g copolymer/(g palladium.hour).

### Example 7

A carbon monoxide/ethene/propene terpolymer was prepared as follows. Into a stirred autoclave with a volume of 100 ml from which air had been driven by purging with nitrogen, a catalyst solution was introduced consisting of:
40 ml methanol,
0.05 mmol palladium acetate,
0.06 mmol 2,2,3,3-tetramethyl-1,4-bis[bis(4-chlorophenyl)phosphino] butane, and
0.1 mmol para-toluenesulphonic acid.

After adding 9,3 g propene, the temperature was brought to 90°C and then a 1:1 carbon monoxide/ethene mixture was forced in until a pressure of 40 bar was reached. During the polymerization the pressure was kept constant by forcing in a 1:1 carbon monoxide/ethene mixture. After 1.7 hours the polymerization was terminated by cooling the reaction mixture to room temperature and releasing the pressure. The polymer was filtered off, washed with methanol and dried.

1.9 g terpolymer was obtained. The polymerization rate was 200 g terpolymer/(g palladium.hour).

### Example 8

A carbon monoxide/ethene/propene terpolymer was prepared in substantially the same way as in example 7, but with the following differences:
a) the catalyst solution contained 0.055 mmol 1,3-bis[bis(4-chlorophenyl)phosphino]propane instead of 2,2,3,3-tetramethyl-1,4-bis[bis(4-chlorophenyl)phosphino]butane,
b) 9.8 g propene was introduced into the autoclave instead of 9.3 g, and
c) the reaction time was 1 hour instead of 1.7 hours.

10.6 g terpolymer was obtained. The polymerization rate was 1970 g terpolymer/(g palladium.hour).

### Example 9

A carbon monoxide/ethene/propene terpolymer was prepared in substantially the same way as in example 7, but with the following differences:
a) the catalyst solution contained 0.055 mmol 1,4-bis[bis(4-chlorophenyl)phosphino]butane instead of 2,2,3,3-tetramethyl-1,4-bis[bis(4-chlorophenyl)phosphino]butane,
b) 9.7 g propene was introduced into the autoclave instead of 9.3 g, and
c) the reaction time was 1.3 hours instead of 1.7 hours.

1.7 g terpolymer was obtained. The polymerization rate was 250 g terpolymer/(g palladium.hour).

### Example 10

A carbon monoxide/ethene/propene terpolymer was prepared in substantially the same way as in example 7, but with the following differences:
a) the catalyst solution contained 0.05 mmol 2,2-dimethyl-1,3-bis[bis(4-chlorophenyl)phosphino]propane instead of 2,2,3,3-tetramethyl-1,4-bis[bis(4-chlorophenyl)phosphino]butane,
b) 12.1 g propene was introduced into the autoclave instead of 9.3 g, and
c) the reaction time was 2 hours instead of 1.7 hours.

0.9 g terpolymer was obtained. The polymerization rate was 90 g terpolymer/(g palladium.hour).

### Example 11

A carbon monoxide/ethene/propene terpolymer was prepared in substantially the same way as in example 7, but with the following differences:
a) the catalyst solution contained 0.055 mmol 2,2,3,3-tetramethyl-1,4-bis(diphenylphosphino)butane instead of 2,2,3,3-tetramethyl-1,4-bis[bis(4-chlorophenyl)phosphino]butane,
b) 13.1 g propene was introduced into the autoclave instead of 9.3 g, and
c) the reaction time was 1 hour instead of 1.7 hours.

1.5 g terpolymer was obtained. The polymerization rate was 270 g terpolymer/(g palladium.hour).

### Example 12

A carbon monoxide/propene copolymer was prepared as follows. Into a stirred autoclave with a volume of 100 ml from which air had been driven by purging with nitrogen, a catalyst solution was introduced consisting of:
40 ml methanol,
0.05 mmol palladium acetate,
0.06 mmol 2,2,3,3-tetramethyl-1,4-bis[bis(4-chlorophenyl)phosphino] butane, and
0.1 mmol para-toluenesulphonic acid.

After adding 10.5 g propene, the contents of the autoclave were heated to 60°C and then carbon monoxide was forced in until a pressure of 40 bar was reached. During the polymerization the pressure was kept constant by forcing in carbon monoxide. After 17.2 hours the polymerization was terminated by cooling the reaction mixture to room temperature and releasing the pressure. The polymer was isolated by evaporating down the reaction mixture.

1.0 g copolymer was obtained. The polymerization rate was 10 g copolymer/(g palladium.hour).

### Example 13

A carbon monoxide/propene copolymer was prepared in substantially the same way as in example 12, but with the following differences:
a) the catalyst solution contained 0.055 mmol 1,3-bis[bis(4-chlorophenyl)phosphino]propane instead of 2,2,3,3-tetramethyl-1,4-bis[bis(4-chlorophenyl)phosphino]butane,
b) 11.4 g propene was introduced into the autoclave instead of 10.5 g, and
c) the reaction time was 3 hours instead of 17.2 hours.

1.2 g copolymer was obtained. The polymerization rate was 80 g copolymer/(g palladium.hour).

### Example 14

A carbon monoxide/propene copolymer was prepared in substantially the same way as in example 12, but with the following differences:
a) the catalyst solution contained 0.055 mmol 1,4-bis[bis(4-chlorophenyl)phosphino]butane instead of 2,2,3,3-tetramethyl-1,4-bis[bis(4-chlorophenyl)phosphino]butane,
b) 11.1 g propene was introduced into the autoclave instead of 10.5 g, and
c) the reaction time was 17 hours instead of 17.2 hours.

3.2 g copolymer was obtained. The polymerization rate was 40 g copolymer/(g palladium.hour).

### Example 15

A carbon monoxide/propene copolymer was prepared in substantially the same way as in example 12, but with the following differences:
a) the catalyst solution contained 0.05 mmol 2,2-dimethyl-1,3-bis[bis(4-chlorophenyl)phosphino] -2-silapropane instead of 2,2,3,3-tetramethyl-1,4-bis[bis(4-chlorophenyl)phosphino]butane,
b) 9.5 g propene was introduced into the autoclave instead of 10.5 g, and
c) the reaction time was 17.1 hours instead of 17.2 hours.

1.6 g copolymer was obtained. The polymerization rate was 20 g copolymer/(g palladium.hour).

### Example 16

A carbon monoxide/propene copolymer was prepared in substantially the same way as in example 12, but with the following differences:
a) the catalyst solution contained 0.05 mmol 1,3-bis[bis(3,5-dichlorophenyl)phosphino]propane instead of 2,2,3,3-tetramethyl-1,4-bis[bis(4-chlorophenyl)phosphino]butane,
b) 9.8 g propene was introduced into the autoclave instead of 10.5 g, and
c) the reaction time was 17 hours instead of 17.2 hours.

0.6 g copolymer was obtained. The polymerization rate was 10 g copolymer/(g palladium.hour).

### Example 17

A carbon monoxide/propene copolymer was prepared in substantially the same way as in example 12, but with the following differences:
a) the catalyst solution contained 0.055 mmol 2,2,3,3-tetramethyl-1,4-bis(diphenylphosphino)butane instead of 2,2,3,3-tetramethyl-1,4-bis[bis(4-chlorophenyl)phosphino]butane,
b) 9.4 g propene was introduced into the autoclave instead of 10.5 g,
c) the reaction temperature was 90°C instead of 60°C, and
d) the reaction time was 1.3 hours instead of 17.2 hours.

7.3 g copolymer was obtained. The polymerization rate was 1090 g copolymer/(g palladium.hour).

### Example 18

A carbon monoxide/propene copolymer was prepared as follows. Into a stirred autoclave with a volume of 300 ml from which air had been driven by purging with nitrogen, a catalyst solution was introduced consisting of:
120 ml methanol,
0.10 mmol palladium acetate,
0.11 mmol 1,3-bis(diphenylphosphino)propane, and
0.2 mmol para-toluenesulphonic acid.

After adding 26 g propene, the contents of the autoclave were heated to 60°C and then carbon monoxide was forced in until a pressure of 40 bar was reached. During the polymerization the pressure was kept constant by forcing in carbon monoxide. After 1 hour the polymerization was terminated by cooling the reaction mixture to room temperature and releasing the pressure. The polymer was isolated by evaporating down the reaction mixture.

6.9 g copolymer was obtained. The polymerization rate was 660 g copolymer/(g palladium.hour).

### Example 19

A carbon monoxide/propene copolymer was prepared in substantially the same way as in example 12, but with the following differences:
a) the catalyst solution contained 0.055 mmol 1,4-bis(diphenylphosphino)butane instead of 2,2,3,3-tetramethyl-1,4-bis[bis(4-chlorophenyl)phosphino]butane,
b) 10.8 g propene was introduced into the autoclave instead of 10.5 g, and
c) the reaction time was 17 hours instead of 17.2 hours.

9.4 g copolymer was obtained. The polymerization rate was 100 g copolymer/(g palladium.hour).

### Example 20

A carbon monoxide/propene copolymer was prepared in substantially the same way as in example 12, but with the following differences:
a) the catalyst solution contained 0.055 mmol 1,4-bis(dibutylphosphino)butane instead of 2,2,3,3-tetramethyl-1,4-bis[bis(4-chlorophenyl)phosphino]butane,
b) 12.1 g propene was introduced into the autoclave instead of 10.5 g,
c) the reaction temperature was 80°C instead of 60°C, and
d) the reaction time was 1 hour instead of 17.2 hours.

3.1 g copolymer was obtained. The polymerization rate was 580 g copolymer/(g palladium.hour).

### Example 21

A carbon monoxide/propene copolymer was prepared in substantially the same way as in example 18, but with the following differences:
a) the catalyst solution contained 0.11 mmol 1,4-bis(methylbutylphosphino)butane instead of 1,3-bis(diphenylphosphino)propane,
b) 27 g propene was introduced into the autoclave instead of 26 g,
c) the reaction temperature was 80°C instead of 60°C, and
d) the reaction time was 3 hours instead of 1 hour.

22.0 g copolymer was obtained. The polymerization rate was 690 g copolymer/(g palladium.hour).

### Example 22

A carbon monoxide/propene copolymer was prepared in substantially the same way as in example 18, but with the following differences:
a) a catalyst solution was used consisting of
   120 ml methanol,
   0.05 mmol palladium acetate,
   0.055 mmol 1,4-bis(methylbutylphosphino)butane, and
   0.1 mmol para-toluenesulphonic acid,
b) 27 g propene was introduced into the autoclave instead of 26 g, and
c) the reaction temperature was 70°C instead of 60°C.

6.4 g copolymer was obtained. The polymerization rate was 1190 g copolymer/(g palladium.hour).

### Example 23

A carbon monoxide/propene copolymer was prepared in substantially the same way as in example 18, but with the following differences:
a) the catalyst solution additionally contained 0.24 mmol pyridine, and
b) 25 g propene was introduced into the autoclave instead of 26 g.

2.3 g copolymer was obtained. The polymerization rate was 220 g copolymer/(g palladium.hour).

### Example 24

A carbon monoxide/propene copolymer was prepared in substantially the same way as in example 18, but with the following differences:
a) the catalyst solution contained 0.11 mmol 1,4-bis(diphenylphosphino)butane instead of 1,3-bis(diphenylphosphino)propane and additionally 0.24 mmol pyridine,
b) 27 g propene was introduced into the autoclave instead of 26 g, and
c) the reaction temperature was 80°C instead of 60°C.

2.0 g copolymer was obtained. The polymerization rate was 190 g copolymer/(g palladium.hour).

### Example 25

A carbon monoxide/propene copolymer was prepared in substantially the same way as in example 18, but with the following differences:
a) the catalyst solution contained 0.11 mmol 1,4-bis(dibutylphosphino)butane instead of 1,3-bis(diphenylphosphino)propane and additionally 0.24 mmol pyridine,
b) 30 g propene was introduced into the autoclave instead of 26 g, and
c) the reaction temperature was 80°C instead of 60°C.

6.9 g copolymer was obtained. The polymerization rate was 650 g copolymer/(g palladium.hour).

### Example 26

A carbon monoxide/propene copolymer was prepared in substantially the same way as in example 18, but with the following differences:
a) the catalyst solution contained 0.11 mmol 1,4-bis(dibutylphosphino)butane instead of 1,3-bis(diphenylphosphino)propane and additionally 0.12 mmol pyridine,
b) 23 g propene was introduced into the autoclave instead of 26 g, and
c) the reaction temperature was 80°C instead of 60°C.

7.5 g copolymer was obtained. The polymerization rate was 710 g copolymer/(g palladium.hour).

### Example 27

A carbon monoxide/propene copolymer was prepared in substantially the same way as in example 18, but with the following differences:
a) the catalyst solution contained 0.11 mmol 1,4-bis(dibutylphosphino)butane instead of 1,3-bis(diphenylphosphino)propane and additionally 0.48 mmol pyridine, and
b) the reaction temperature was 80°C instead of 60°C.

5.7 g copolymer was obtained. The polymerization rate was 540 g copolymer/(g palladium.hour).

### Example 28

A carbon monoxide/propene copolymer was prepared in substantially the same way as in example 18, but with the following differences:
a) a catalyst solution was used consisting of
   120 ml methanol,
   0.05 mmol palladium acetate,
   0.055 mmol 1,4-bis(methylbutylphosphino)butane,
   0.1 mmol para-toluenesulphonic acid, and
   0.12 mmol pyridine,
b) 28 g propene was introduced into the autoclave instead of 26 g, and
c) the reaction temperature was 80°C instead of 60°C.

3.3 g copolymer was obtained. The polymerization rate was 600 g copolymer/(g palladium.hour).

### Example 29

A carbon monoxide/propene copolymer was prepared in substantially the same way as in example 18, but with the following differences:
a) the catalyst solution contained 0.11 mmol 1,4-bis(methylbutylphosphino)butane instead of 1,3-bis(diphenylphosphino)propane and additionally 0.24 mmol pyridine,
b) 27 g propene was introduced into the autoclave instead of 26 g, and
c) the reaction temperature was 70°C instead of 60°C.

9.7 g copolymer was obtained. The polymerization rate was 440 g copolymer/(g palladium.hour).

### Example 30

A carbon monoxide/propene copolymer was prepared in substantially the same way as in example 18, but with the following differences:
a) a catalyst solution was used consisting of
   40 ml acetone,
   80 ml methanol,
   0.05 mmol palladium acetate,
   0.055 mmol 1,4-bis(dibutylphosphino)butane,
   0.1 mmol para-toluenesulphonic acid, and
   0.1 mmol pyridine,
b) 120 ml propene was introduced into the autoclave instead of 26 g,
c) the reaction temperature was 80°C instead of 60°C, and
d) the reaction time was 1.4 hour instead of 1 hour.

5.6 g copolymer was obtained. The polymerization rate was 770 g copolymer/(g palladium.hour).

### Example 31

A carbon monoxide/propene copolymer was prepared in substantially the same way as in example 18, but with the following differences:
a) a catalyst solution was used consisting of
   40 ml acetone,
   80 ml methanol,
   0.05 mmol palladium acetate,
   0.055 mmol 1,4-bis(dibutylphosphino)butane,
   0.1 mmol para-toluenesulphonic acid, and
   0.11 mmol quinoline,
b) 25 ml propene was introduced into the autoclave instead of 26 g,
c) the reaction temperature was 80°C instead of 60°C, and
d) the reaction time was 2.1 hour instead of 1 hour.

2.1 g copolymer was obtained. The polymerization rate was 180 g copolymer/(g palladium.hour).

### Example 32

A carbon monoxide/propene copolymer was prepared in substantially the same way as in example 12, but with the following differences:
a) the catalyst solution contained 0.055 mmol 1,4-bis(dibutylphosphino)butane instead of 2,2,3,3-tetramethyl-1,4-bis[bis(4-chlorophenyl)phosphino]butane and additionally 0.11 mmol 2-methylpyridine,
b) 25 ml propene was introduced into the autoclave instead of 10.5 g,
c) the reaction temperature was 80°C instead of 60°C, and
d) the reaction time was 1.9 hour instead of 17.2 hours.

1.7 g copolymer was obtained. The polymerization rate was 160 g copolymer/(g palladium.hour).

With the aid of ¹³C-NMR analysis the degree of furanisation of the polymers prepared according to examples 1-32 was determined, expressed as the number of units from carbon monoxide present in optionally 3-alkyl-substituted 2,5-furandiyl groups as a percentage of the total number of units from carbon monoxide that was present in the polymers. For the carbon monoxide/ethene copolymers prepared according to examples 1-6, the degree of furanisation was less than 5%. The carbon monoxide/ethene/propene terpolymers prepared according to examples 7-11 had a degree of furanisation of between 5 and 15%. For the carbon monoxide/propene copolymers prepared according to examples 12-17 the degree of furanisation was between 30 and 50%. (For the polymer prepared according to example 13 the degree of furanisation was 49%.) The degree of furanisation of the carbon monoxide/propene copolymers prepared according to examples 18-32 is given in the following table.

**Table**

| Polymer prepared according example No. | Degree of furanisation, % |
|---|---|
| 18 | 24 |
| 19 | 25 |
| 20 | 25 |
| 21 | 26 |
| 22 | 15 |
| 23 | 1 |
| 24 | 5 |
| 25 | 4 |
| 26 | 5 |
| 27 | 3 |
| 28 | 1 |
| 29 | 1 |
| 30 | <0.1 |
| 31 | 0.6 |
| 32 | 0.8 |

Of the examples 1-32, examples 23-32 are according to the invention. In these examples carbon monoxide/propene copolymers were prepared using catalyst compositions according to the invention comprising a Group VIII metal, an acid with a pKa of less than 6, a phosphorus bidentate ligand with the general formula (R¹)(R)P-R-P(R¹)(R) and an amine. According to these examples, polymers were obtained in which the degree of furanisation lay between <0.1 and 5%. Examples 1-22 fall outside the scope of the invention and are included in the patent application for comparison. In these examples, catalyst compositions were used which were closely related to those according to the invention, but in which no amine was present. The inhibiting effect on the furanisation as a consequence of the presence of an amine in the catalyst compositions can clearly be seen by comparing the results of the following examples:
Example 23 with example 18 (degree of furanisation from 24 to 1%)
Example 24 with example 19 (degree of furanisation from 25 to 5%)
Example 25-27 with example 20 (degree of furanisation from 25 to 3-5%)
Example 28 with example 21 (degree of furanisation from 26 to 1%)
Example 29 with example 22 (degree of furanisation from 15 to 1%)

It was established by ¹³C-NMR analysis that the polymers prepared according to examples 1-32 were built up of linear chains in which the units from carbon monoxide on the one hand and the units from the olefins used on the other hand were present in an alternating arrangement. In the carbon monoxide/ethene/propene terpolymers the units from ethene and propene were distributed in the polymer chains in a random manner relative to one another.

## Claims

1. Catalyst compositions based on:
a) a Group VIII metal,
b) an anion of an acid with a pKa of less than 6, and
c) a phosphorus bidentate ligand with the general formula (R¹)(R)P-R-P(R¹)(R) in which R¹ and R represent identical or different optionally polar substituted hydrocarbyl groups and in which R is a divalent organic bridging group which in the bridge connecting the two phosphorus atoms with each other contains at least two carbon atoms, characterized in that additionally
d) an amine is present.

2. Catalyst compositions according to claim 1, characterized in that they contain
component b) in a quantity of 1-100 mol per g.atom Group VIII metal,
component c) in a quantity of 0.5-2 mol per g.atom Group VIII metal,
component d) in a quantity of 0.25-25 mol per mol acid.

3. Catalyst compositions according to claim 1 or 2, characterized in that as component c) they contain a phosphorus bidentate ligand in which the bridging group R contains three or four atoms in the bridge connecting the two phosphorus atoms with each other.

4. Catalyst compositions according to one or more of claims 1-3, characterized in that as component c) they contain a phosphorus bidentate ligand in which the groups R¹ and R are alkyl groups which each contain no more than 10 carbon atoms and in which the bridging group R contains four atoms in the bridge.

5. Catalyst compositions according to claim 4, characterized in that as component c) they contain a phosphorus bidentate ligand in which the groups R¹ and R are alkyl groups which differ from each other in their carbon number, one being methyl, such as 1,4-bis(methylbutylphosphino)butane.

6. Catalyst compositions according to one or more of claims 1-5, characterized in that as component d) they contain an amine of which the nitrogen atom, together with five carbon atoms, forms part of an aromatic ring.

7. Catalyst compositions according to claim 6, characterized in that as component d) they contain an amine selected from pyridine, 2-methylpyridine and quinoline.

8. Process for the preparation of polymers, wherein a mixture of carbon monoxide with one or more α-olefins with at least three carbon atoms per molecule (C₃₊ α-olefins) and optionally also with ethene is contacted at elevated temperature and pressure with a catalyst composition according to one or more of claims 1-7.

9. Process according to claim 8, characterized in that it is applied for the preparation of copolymers of carbon monoxide with propene or of terpolymers of carbon monoxide with ethene and with propene.

10. Process according to claim 8 or 9, characterized in that it is carried out at a temperature of 25-150°C, a pressure of 2-150 bar and that per mol of olefin to be polymerized a quantity of catalyst composition is used which contains 10⁻⁷-10⁻³ g.atom Group VIII metal.

## Patentansprüche

1. Katalysatorzusammensetzungen, beruhend auf:
a) einem Metall der VIII. Nebengruppe,
b) einem Anion einer Säure mit einem pKs unter 6 und
c) einem zweizähnigen Phorsphorliganden mit der allgemeinen Formel (R¹) (R)P-R-P(R¹) (R), wobei R¹ und R gleiche oder verschiedene, gegebenenfalls polarsubstituierte Kohlenwasserstoffgruppen bedeuten und R eine zweiwertige organische verbrückende Gruppe ist, die in der Brücke, die die beiden Phosphoratome miteinander verbindet, mindestens 2 Kohlenstoffatome enthält, dadurch gekennzeichnet, daß zusätzlich
d) ein Amin vorhanden ist.

2. Katalysatorzusammensetzungen nach Anspruch 1, dadurch gekennzeichnet, daß sie
Komponente b) in einer Menge von 1-100 Mol pro g Atom des Metalls der VIII. Nebengruppe,
Komponente c) in einer Menge von 0,5-2 Mol pro g Atom des Metalls der VIII. Nebengruppe,
Komponente d) in einer Menge von 0,25-25 Mol pro Mol Säure enthalten.

3. Katalysatorzusammensetzungen nach Anspruch 1 oder 2, dadurch gekennzeichnet, daß sie als Komponente c) einen zweizähnigen Phosphorliganden enthalten, in dem die verbrückende Gruppe R drei oder vier Atome in der Brücke, die die beiden Phosphoratome miteinander verbindet, enthält.

4. Katalysatorzusammensetzungen nach einem oder mehreren der Ansprüche 1-3, dadurch gekennzeichnet, daß sie als Komponente c) einen zweizähnigen Phosphorliganden enthalten, in dem die Gruppen R¹ und R Alkylgruppen sind, die jeweils nicht mehr als 10 Kohlenstoffatome enthalten, und in dem die verbrückende Gruppe R vier Atome in der Brücke enthält.

5. Katalysatorzusammensetzungen nach Anspruch 4, dadurch gekennzeichnet, daß sie als Komponente c) einen zweizähnigen Phosphorliganden enthalten, in dem die Gruppen R¹ und R Alkylgruppen sind, die sich in der Anzahl ihrer Kohlenstoffatome voneinander unterscheiden und von denen eine Methyl ist, zum Beispiel 1,4-bis(Methylbutylphosphino)butan.

6. Katalysatorzusammensetzungen nach einem oder mehreren der Ansprüche 1 bis 5, dadurch gekennzeichnet, daß sie als Komponente d) ein Amin, bei dem das Stickstoffatom zusammen mit 5 Kohlenstoffatomen Teil eines aromatischen Rings bildet, enthalten.

7. Katalysatorzusammensetzungen nach Anspruch 6, dadurch gekennzeichnet, daß sie als Komponente d) eines der Amine Pyridin, 2-Methylpyridin und Chinolin enthalten.

8. Verfahren zur Herstellung von Polymeren, bei dem ein Gemisch aus Kohlenmonoxid und einem oder mehreren α-Olefinen mit mindestens 3 Kohlenstoffatomen pro Molekül (C₃₊-α-Olefine) und gegebenenfalls auch mit Ethen bei erhöhter Temperatur und erhöhtem Druck mit einer Katalysatorzusammensetzung gemäß einem der Ansprüche 1-7 kontaktiert wird.

9. Verfahren nach Anspruch 8, dadurch gekennzeichnet, daß es zur Herstellung von Copolymeren aus Kohlenmonoxid und Propen oder von Terpolymeren aus Kohlenmonoxid und Ethen und Propen angewendet wird.

10. Verfahren nach Anspruch 8 oder 9, dadurch gekennzeichnet, daß es bei einer Temperatur von 25-150°C und einem Druck von 2 bis 150 bar durchgeführt wird und daß pro Mol zu polymerisierendem Olefin eine Menge an Katalysatorzusammensetzung verwendet wird, die 10⁻⁷-10⁻³ g Atome des Metalls der VIII. Nebengruppe enthält.

## Revendications

1. Compositions catalytiques à base de :
a) un métal du groupe VIII,
b) un anion d'un acide possédant un pKa inférieur à 6, et
c) un ligand bidenté phosporé, répondant à la formule générale :
(R¹) (R)P-R-P(R¹) (R)
dans laquelle R¹ et R représentent des radicaux hydrocarbyle à substitution polaire éventuelle, identiques ou différents, et dans laquelle R représente un groupe de pontage organique bivalent qui contient au moins deux atomes de carbone dans le pont reliant les deux atomes de phosphore l'un à l'autre, caractérisées en ce que
d) une amine y est, en outre, présente.

2. Compositions catalytiques suivant la revendication 1, caractérisées en ce qu'elles contiennent
le composant b) en une proportion de 1 à 100 moles par atome-gramme de métal du groupe VIII,
le composant c) en une proportion de 0,5 à 2 moles par atome-gramme de métal du groupe VIII,
le composant d) en une proportion de 0,25 à 25 moles par mole d'acide.

3. Compositions catalytiques suivant la revendication 1 ou 2, caractérisées en ce que, à titre de composant c), elles contiennent un ligand bidenté phosphoré dans lequel le groupe de pontage R contient trois ou quatre atomes dans le pont reliant les deux atomes de phosphore l'un à l'autre.

4. Compositions catalytiques suivant une ou plusieurs des revendications 1 à 3, caractérisées en ce que, à titre de composant c), elles contiennent un ligand bidenté phosphoré dans lequel les substituants R¹ et R représentent des radicaux alkyle qui ne contiennent chacun pas plus de dix atomes de carbone et dans lequel le groupe de pontage R contient quatre atomes dans le pont.

5. Compositions catalytiques suivant la revendication 4, caractérisées en ce que, à titre de composant c), elles contiennent un ligand bidenté phosphoré dans lequel les substituants R¹ et R sont des radicaux alkyle qui diffèrent mutuellement par leur nombre d'atomes de carbone, l'un étant le radical méthyle, comme le 1,4-bis(méthylbutylphosphino)butane.

6. Compositions catalytiques suivant une ou plusieurs des revendications 1 à 5, caractérisées en ce que, à titre de composant d), elles contiennent une amine dans laquelle l'atome d'azote fait partie avec cinq atomes de carbone d'un noyau aromatique.

7. Compositions catalytiques suivant la revendication 6, caractérisées en ce que, à titre de composant d), elles contiennent une amine choisie parmi la pyridine, la 2-méthylpyridine et la quinoléine.

8. Procédé de préparation de polymères, selon lequel on met un mélange de monoxyde de carbone avec une ou plusieurs α-oléfines comportant au moins trois atomes de carbone par molécule (α-oléfines C₃₊) et éventuellement aussi avec de l'éthène en contact, à température et pression élevées, avec une composition catalytique selon une ou plusieurs des revendications 1 à 7.

9. Procédé suivant la revendication 8, caractérisé en ce qu'on l'applique à la préparation de copolymères du monoxyde de carbone avec le propène ou des terpolymères du monoxyde de carbone avec l'éthène et le propène.

10. Procédé suivant la revendication 8 ou 9, caractérisé en ce qu'on l'entreprend à une température de 25 à 150°C, sous une pression de 2 à 150 bars et en ce que l'on utilise, par mole d'oléfine à polymériser, une quantité de composition catalytique qui contient 10⁻⁷-10⁻³ atome-gramme de métal du groupe VIII.
